# EUROPÄISCHE PATENTSCHRIFT

(11) **EP 0 423 709 B1**
(45) Veröffentlichungstag und Bekanntmachung des Hinweises auf die Patenterteilung: **19.07.1995**
(21) Anmeldenummer: 90119809.3
(22) Anmeldetag: 16.10.1990
(51) Int. Cl.: B65D 19/26

(54) **Palette, insbesondere Pool-Flachpalette**
Pallet, especially pool-flat pallet
Palette, notamment palette d'échange européenne

(30) Priorität: 17.10.1989 DE 3934561
(43) Veröffentlichungstag der Anmeldung: 24.04.1991
(73) Patentinhaber: ESCH KORNITOL PRODUKTE GmbH & Co. KG., D-81479 München (DE)
(72) Erfinder: Esch, Guenther, D-82491 Grainau/Obb. (DE)

(56) Entgegenhaltungen:
- EP-A- 0 068 586
- US-A- 1 770 614

## Beschreibung

Die Erfindung betrifft eine Palette, insbesondere eine Pool-Flachpalette nach dem Oberbegriff des Anspruches 1.

Unter Pool-Flachpaletten versteht man Paletten zum Gütertransport, die in Europa in einem Pool organisiert sind, der von den europäischen Eisenbahnen überwacht wird. Diese Euro-Palette wird im Format 800 x 1200 mm unter dem Merkblatt UIC 435-2 standardmäßig aus Holz hergestellt und im Umlauf-Tauschverfahren bewegt.

Diese Pool-Paletten unterliegen durch den ständigen Wechsel einem hohen Verschleiß und müssen trotz einer grundsätzlichen Reparaturfähigkeit regelmäßig ersetzt werden. Da diese Paletten aus Holz bestehen, was aufgrund der mittlerweile fast weltweit bestehenden umweltbedingten Waldprobleme einen zu wertvollen Werkstoff für eine derartige Verwendung darstellt, müssen enorme Holzmengen eingesetzt werden, was wiederum die ohnehin bestehenden Waldprobleme nicht unerheblich verschärft.

Paletten, die aus Deck- und gegebenenfalls Bodenleisten aufgebaut sind und die Querrahmen zur Halterung der Leisten aufweisen, sind aus der US-A-1 770 614 bekannt. Die dort beschriebene Palette weist ein Trägerelement auf, das an der Oberseite zur Stoßdämpfung mit einer elastischen Auflage beschichtet ist.

Es ist daher Aufgabe der vorliegenden Erfindung, eine Palette der im Oberbegriff des Anspruches 1 angegebenen Art zu schaffen, die bei Beibehaltung gleicher Abmessungen und gleicher Tragfähigkeit leichter ist und günstiger herstellbar ist und deren Haltbarkeit erheblich verbessert ist.

Die Lösung dieser Aufgabe erfolgt durch die Merkmale des Anspruches 1.

Dadurch ist es zunächst möglich, Holz als Werkstoff durch ein Trägerteil und eine geeignete Beschichtung zu ersetzen, die zusammen ein Verbundteil bilden, das holzfrei ist und dennoch in seiner Leistungsfähigkeit aus Holz bestehenden Deck- und insbesondere Bodenleisten nicht nachsteht. Da die erfindungsgemäße Palette ferner konstruktiv dieselben Abmessungen aufweisen kann und auch optisch nahezu genauso aufgebaut werden kann wie die bisher verwendeten üblichen Paletten, kann die erfindungsgemäße Palette parallel zu den bestehenden Holzpaletten verwendet werden, wobei ein sukzessiver Ersatz der Holzpaletten angestrebt werden sollte.

Zu den weiteren Vorteilen zählt, daß durch geeignete Materialwahl eine bis zum 10-fachen erhöhte Haltbarkeit (gemessen am Umlauf im Pool) erreichbar ist. Ferner ist es möglich, die Bruchgefahr durch die Verwendung elastischer Werkstoffe zu verringern, wobei darüber hinaus der Vorteil einer geringeren Verletzungsgefahr erzielbar ist, da bei Holzpaletten häufig Verletzungen an Holzsplittern am ungehobelten Holz auftreten.

Ferner ist es möglich, die Brennbarkeit der erfindungsgemäßen Palette verglichen mit Holzpaletten zu verringern.

Die Unteransprüche haben vorteilhafte Weiterbildungen der Erfindung zum Inhalt.

Als Trägerteil ist nahezu jegliche Art von Hohlprofil verwendbar, wobei zwar runde, rechteckige oder quadratische Hohlprofile besonders bevorzugte Ausführungsformen darstellen, jedoch auch jegliche andere Form grundsätzlich geeignet ist.

Die zusätzliche Anordnung von Vertiefungen kann die Festigkeit des Verbundes zwischen Trägerteil und Beschichtung verbessern.

Das aus dem Trägerteil gebildete Skelett kann aus Metall jeglicher Art bestehen, wobei besonders bevorzugte Materialien Stahl, Aluminium oder Leichtmetallegierungen sind. Ferner denkbar sind als Materialien Glasfasern oder jegliche Art synthetischer Materialien wie thermoplastische oder duroplastische Stoffe wie auch Preßstoffe aus synthetischen oder natürlichen Materialien, wie schließlich auch Agglomerate oder Konglomerate solcher oder ähnlicher Stoffe.

Als Alternative zu den zuvor genannten Hohlprofilen ist es auch denkbar, ein Skelett aus Flachprofilen oder einer Kombination aus Flach- und Hohlprofilen vorzusehen, wobei grundlegend ebenfalls die gleichen Materialien wie zuvor genannt verwendbar sind. Besonders bevorzugte Flachprofile sind als Wellenprofile und/oder gestanzte, gelochte Bleche ausgebildet. Schließlich sind auch Geflechtkonstruktionen aus den zuvor genannten Materialien denkbar.

Als Material für die Beschichtung bzw. Ummantelung wird vorzugsweise Abfallmaterial verwendet, in welchem Falle in doppelter Hinsicht umweltschutztechnische Vorteile erreicht werden, da zum einen der wertvolle Werkstoff Holz nicht mehr benötigt wird und zum anderen Materialien wiederverwendet werden können, die als Abfall ansonsten die Umwelt belasten würden bzw. hohe Entsorgungskosten mit sich bringen.

Ein besonders bevorzugtes Material ist aus diesem Gesichtspunkt aus KFZ-Altreifen gewonnener Gummi bzw. Kautschuk. Bei Verwendung dieses Materiales kann die Umhüllung durch Vulkanisierung oder Laminierung oder ähnlicher Verfahren erfolgen, wobei der kostenmäßige Vorteil besteht, daß Altreifen und Gummi-Industrieabfälle nahezu kostenlos verfügbar sind. Der so aus Abfallstoffen gewonnene Werkstoff Gummi kann entweder geschmolzen oder pulverisiert und mittels geeigneter Zusätze zu einer Gummimasse verarbeitet werden, die dann auf die Trägerskelette aufgebracht bzw. in Formen gepreßt werden kann.

Wird die erfindungsgemäße Palette in dieser Art und Weise hergestellt, ergibt sich ferner der besondere Vorteil, daß das Gewicht um ca. 20 % geringer ist im Vergleich zu einer Holzpalette, da das Gewicht der Holzpaletten häufig durch einen relativ hohen Nässegrad erheblich erhöht werden kann. Die Grundstoffe der erfindungsgemäßen Palette hingegen nehmen praktisch kein Wasser auf, so daß sich erhebliche Gewichtsvorteile erzielen lassen.

Darüber hinaus ergibt sich der Vorteil, daß die erfindungsgemäße Palette voll recyclingfähig ist, da insbesondere bei der Verwendung von Gummi sämtliche aus diesem Werkstoff bestehende Teile durch geeignete Verfahren wiederum voll verwertbar sind und die Tragkonstruktionen ebenfalls durch Einschmelzen wiederverwendet werden können, falls hierfür schmelzfähige Werkstoffe verwendet werden. Darüber hinaus ergibt sich, wie bereits erwähnt, eine sehr hohe Lebensdauer, wobei auch die erfindungsgemäße Palette reparaturfähig ist.

Ferner kann die erfindungsgemäße Palette in jedem Land, in dem sie benötigt wird, zentral gefertigt und in den regionalen Schwerpunkt-Endmontagebetrieben montiert werden, was eine große Frachtvolumen-Ersparnis möglich macht, da die bisherige bekannte Holzpalette fertig montiert verladen werden mußte. So konnten bisher nur durchschnittlich 700 Holzpaletten auf einem LKW verladen werden, wohingegen vom Volumen her mindestens 1400 erfindungsgemäße Paletten in Form von Einzelteilen verladbar sind, da die Montage dezentral durchgeführt werden kann.

Hieraus ergeben sich erhebliche Einsparungen beim Transport und der Fertigung.

Als besonders bevorzugte Montagearten der Decken und eventuell Bodenleisten an den Querrahmen der erfindungsgemäßen Paletten können Verklebungen, Verschraubungen und Vernieten hervorgehoben werden, wobei die erstere Montageart die billigste und sicherste Methode darstellt.

Weitere Einzelheiten, Merkmale und Vorteile der Erfindung ergeben sich aus nachfolgender Beschreibung von Ausführungsbeispielen anhand der Zeichnung.

Es zeigen:
- Fig. 1-4: Querschnitte durch Deckleisten einer erfindungsgemäßen Palette, und
- Fig. 5: einen Querschnitt durch einen Querrahmen der erfindungsgemäßen Palette mit einer darin montierten Deckleiste.

Der grundlegende Aufbau einer in den Figuren nicht insgesamt dargestellten erfindungsgemäßen Palette weist Deckleisten auf, auf die die Fracht aufgelegt wird und die die Form langgestreckter im wesentlichen rechteckiger Bretter haben. Im Hinblick darauf, daß die Deckleisten der erfindungsgemäßen Palette jedoch nicht aus Holz bestehen, wird der ansonsten bei Holzpaletten übliche Ausdruck "Deckbrett" durch den Ausdruck "Deckleiste" ersetzt.

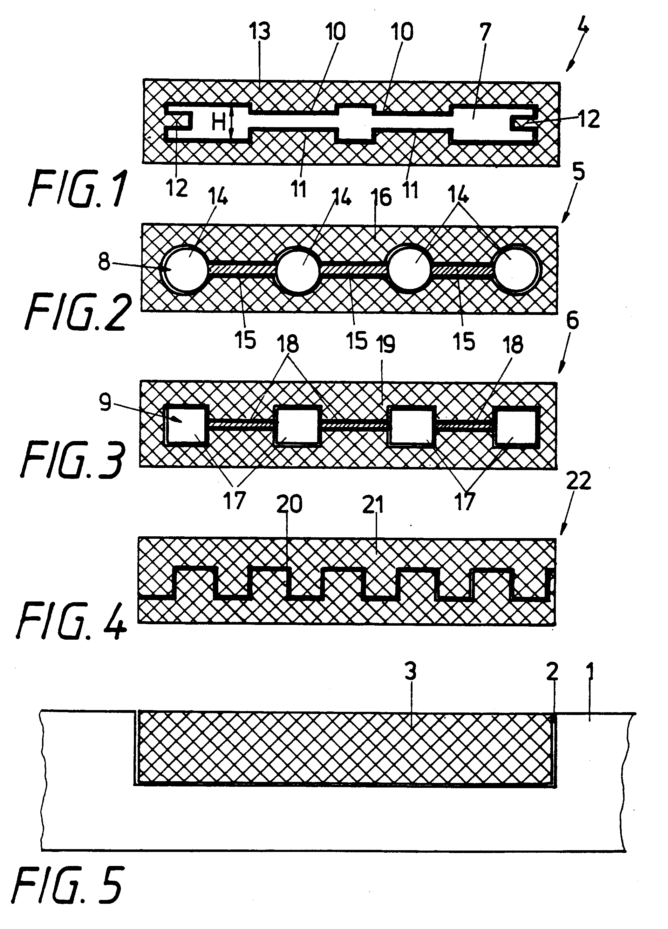

Die nebeneinander in einer Ebene angeordneten Deckleisten werden von Querrahmen getragen, von denen in Fig. 1 der Querrahmen 1 gezeigt ist. Der Querrahmen 1 kann als Rechteckprofil und Preßteil ausgebildet sein, wobei grundsätzlich auch eine Konstruktion als Verbundteil mit einem Trägerteil und einer Ummantelung denkbar ist. Die in Fig. 5 dargestellte bevorzugte Ausführungsform des Querrahmens 1 weist eine Vertiefung 2 auf, in der eine Deckleiste 3 angeordnet ist. Das Vorsehen der Vertiefung 2 im Deckrahmen 1 ergibt eine Erhöhung der Stabilität. Es ist jedoch grundsätzlich auch möglich, die Deckleiste 3 auf dem Querrahmen 1, also ohne Vertiefung 2, zu montieren. Zur Befestigung der Deckleiste 3 am Querrahmen 1 sind Verklebungen, Verschraubungen oder Nietverbindungen geeignet.

Üblicherweise weist die erfindungsgemäße Palette eine Mehrzahl von Querrahmen, insbesondere drei nebeneinander angeordnete Querrahmen auf, die sich senkrecht zur Längserstreckung der Deckleisten erstrecken. Die Querrahmen können wiederum an ihrer der Deckleiste abgewandten Seite über eine Bodenleiste miteinander verbunden sein, die sich parallel zu den Deckleisten erstreckt.

Mögliche Deckleistenkonstruktionen sind in den Fig. 1-4 dargestellt.

Hierbei handelt es sich bei den Ausführungsformen gemaß den Fig. 1-3 um Deckleisten 4, 5 bzw. 6, die als Trägerteil ein rechteckiges, rundes oder quadratisches Hohlprofil 7, 8 bzw. 9 aufweisen.

Im Falle der Fig. 1 handelt es sich bei dem Hohlprofil 7 um ein rechteckiges Hohlprofil, das im Beispielsfalle eine Mehrzahl von Vertiefungen 10, 11 bzw. 12 an den Flach- und Stirnseiten aufweist, und daß von einer Beschichtung in Form einer allseitigen Ummantelung 13 vollständig umgeben ist. Die Gesamthöhe dieser Anordnung entspricht den Standardmaßen von Euro-Paletten und beträgt mithin 22 mm, wobei das Hohlprofil in den ausnehmungsfreien Bereichen eine Höhe H von ca. 10 mm aufweist. Das Vorsehen der Vertiefungen bzw. Ausnehmungen ergibt den Vorteil, daß die Ummantelung 13, die beispielsweise aufvulkanisierter Gummi aus Altreifen sein kann, einen besonders sicheren Halt auf dem Trägerteil 7 hat.

Die Wandstärke des Hohlprofiles 7 kann von Anwendungsfall zu Anwendungsfall unterschiedlich sein und wird vor allem anhand der zu erwartenden Belastungen bemessen.

Das Hohlprofil 8 der Ausführungsform gemäß Fig. 2 weist eine Mehrzahl von im Beispielsfalle kreiszylindrischen Rohren 14 auf, die über Querträger 15 miteinander zur Bildung des Hohlprofiles 8 verbunden sind. Auch bei dieser Ausführungsform ist eine Ummantelung 16 vorgesehen, die das Hohlprofil 8 allseitig umgibt und aus den eingangs genannten Stoffen bestehen kann.

Fig. 3 zeigt schließlich ein Hohlprofil, das aus einer Mehrzahl von quadratischen Rohrstücken 17 besteht, die wiederum über Querträger 18 miteinander verbunden sind. Auch in diesem Falle ist als Beschichtung eine allseitige Ummantelung 19 vorgesehen, die ebenfalls aus den eingangs erwähnten Materialien bestehen kann.

Fig. 4 zeigt schließlich eine Ausführungsform, bei der ein gestanztes Flachprofil 20 vorgesehen ist, das bei einer alternativen Ausführungsform auch wellenförmig oder ähnlich ausgebildet sein könnte. Auch dieses Profil 20 ist von einer allseitigen Ummantelung 21 aus Gummi oder anderen, vorzugsweise aus Abfallstoffen hergestellten elastischen Massen umgeben und bildet die Deckleiste 22.

Die so ausgebildeten Deckleisten können mit dem Querrahmen 1 in der zuvor beschriebenen Art und Weise zur Bildung einer erfindungsgemäßen Palette verbunden werden. Wahlweise kann die Palette ferner Bodenleisten aufweisen, die ebenso wie die in den Fig. 1-4 dargestellten Deckleisten ausgebildet sein können.

In einer weiteren nicht näher gezeigten Ausführungsform kann man vorteilhafterweise die Beschichtung, bzw die Ummantelung 13 bzw. 19 mit einer Oberflächenstruktur versehen bzw. anrauhen. Dazu wird beispielsweise die Gummioberfläche mit einem gepressten, geprägten oder auf irgendeine übliche Weise erzeugten rutschhemmenden Profil, z. B. Erhöhungen, Rautenmuster, Noppen, etc. versehen. Dadurch wird eine besonders günstige Stabilisierung des Transportguts ermöglicht.

Abschließend ist ferner zu ergänzen, daß es generell möglich ist, die erfindungsgemäße Palette so aufzubauen, wie auch die eingangs beschriebenen Pool-Flachpaletten aufgebaut sind, also Kanthölzer, Eckklötze und Bodenbretter (Bodenleisten) aufweist.

Außerdem ist es zusätzlich möglich, Teile der Palette, z. B. die Deckleisten, oder die gesamte erfindungsgemäße Palette mit Holz- oder Holzstoffklötzen, insbesondere für die bekannten Pool-Paletten, zu kombinieren.

Alle diese Teile sind bei der erfindungsgemäßen Palette jedoch in der in den Patentansprüchen im einzelnen angegebenen Art ausgebildet.

## Patentansprüche

1. Palette, insbesondere Pool-Flachpalette, mit Deck- und gegebenenfalls Bodenleisten (3; 4; 5; 6; 22) und mit Querrahmen (1) zur Halterung der Deck- und gegebenenfalls Bodenleisten, wobei die Deck- und gegebenenfalls Bodenleisten (3; 4; 5; 6; 22) ein Trägerteil (7; 8; 9; 20) und eine Beschichtung (13; 16; 19; 21) aufweisen, dadurch gekennzeichnet, daß die Beschichtung (13; 16; 19; 21) aus elastischem Material besteht und das Trägerteil (7; 8; 9; 21) zur Bildung einer vollständigen Ummantelung umgibt.

2. Palette nach Anspruch 1, dadurch gekennzeichnet, daß das Trägerteil (7; 8; 9) ein Hohlprofil oder ein Flachprofil ist.

3. Palette nach Anspruch 2, dadurch gekennzeichnet, daß das Hohlprofil (7) Vertiefungen (10, 11, 12) aufweist.

4. Palette nach einem der Ansprüche 1-3, dadurch gekennzeichnet, daß das Material des Trägerteils (7; 8; 9; 20) Metall, Kunststoff, synthetischer Preßstoff oder natürlicher Preßstoff ist.

5. Palette nach einem der Ansprüche 1-4, dadurch gekennzeichnet, daß das Material der Beschichtung recyclingfähiges Abfallmaterial, bevorzugt Gummi oder Kautschuk, besonders bevorzugt Gummimaterial in Form von KFZ-Altreifen oder Industrieabfällen ist.

6. Palette nach einem der Ansprüche 1 bis 5, dadurch gekennzeichnet, daß die Beschichtung (13; 16;, 19; 21) mindestens teilweise auf der Oberseite zur Rutschhemmung strukturiert ist.

7. Palette nach einem der Ansprüche 1-6, dadurch gekennzeichnet, daß die Querrahmen (1) Aufnahmeausnehmungen (2) für die Deckleisten (3) aufweisen.

8. Palette nach einem der Ansprüche 1-7, dadurch gekennzeichnet, daß die Querrahmen (1) als Rechteckprofile ausgebildet sind.

9. Palette nach einem der Ansprüche 1-8, dadurch gekennzeichnet, daß die Querrahmen (1) und Deckleisten (3) verleimt, verschraubt oder vernietet sind.

10. Palette nach einem der Ansprüche 1-9, dadurch gekennzeichnet, daß die Palette außerdem Eckklötze aufweist, die auch aus einem Trägerteil, welches vollständig mit dem elastischen Material ummantelt ist, bestehen.

## Claims

1. Pallet, in particular pool flat pallet, with top deck slats and as the case may be bottom deck slats (3; 4; 5; 6; 22) and with crossframe (1) for fastening the top deck slats and as the case may be bottom deck slats, whereby the top deck slats and as the case may be bottom deck slats (3; 4; 5; 6; 22) show a bearer (7; 8; 9; 20) and a coating (13; 16; 19; 21) characterized by the coating (13; 16; 19; 21) consisting of elastic material and surrounding the bearer (7; 8; 9; 21) so as to form a complete cladding.

2. Pallet according to claim 1, characterized by the fact that the carrying part (7; 8; 9) is a hollow or a flat section.

3. Pallet according to claim 2, characterized by the fact that the hollow section (7) has recesses (10, 11, 12).

4. Pallet according to claims 1-3, characterized by the fact that the material of the carrying part (7; 8; 9;20) is metal, plastic, synthetic moulded material or natural moulded material.

5. Pallet according to claims 1-4, characterized by the fact that the coating material is recyclable waste material, preferably rubber or caoutchouc, especially preferred rubber material in the form of old car tyres or industrial wastes.

6. Pallet according to claims 1 to 5, characterized by the fact that the coating (13; 16; 19; 21) is at least partially structured to produce an antiskidding effect.

7. Pallet according to claims 1-6, characterized by the fact that the cross frame (1) is provided with accommodation recesses (2) for the cover strips (3).

8. Pallet according to claims 1-7, characterized by the fact that the cross frame (1) is designed as rectangular section.

9. Pallet according to claims 1-8, characterized by the fact the cross frames (1) and cover strips (3) are bonded, bolted, nailed or riveted.

10. Pallet according to claims 1-9, characterized by the fact that the pallet is further provided with squared beams which also constitute a carrying part that is completely sheathed with the elastic material.

## Revendications

1. Palette, notamment palette d'échange européenne plate, avec des baguettes de recouvrement et éventuellement des baguettes de fond (3, 4, 5, 6, 22) et avec des cadres transversaux (1) pour le maintient des baguettes de recouvrement, éventuellement des baguettes de fond, celles-ci (3, 4, 5, 6, 22) présentant une pièce de support (7, 8, 9, 20) et un revêtement (13, 16, 19, 21), caractérisée en ce que le revêtement (13, 16, 19, 21) est fait en un matériau élastique qui entoure la pièce de support (7, 8, 9, 21) en formant une enveloppe complète.

2. Palette selon la revendication 1, caractérisée par le fait que la partie de support (7; 8; 9) est un profil creux ou un plat.

3. Palette selon la revendication 2, caractérisée par le fait que le profil creux (7) présente des cavitées (10, 11, 12).

4. Palette selon l'une des revendications 1 - 3, caractérisée par le fait que le matériel de la partie de support (7, 8, 9, 20) consiste en métal, en matière plastique, en matière comprimée synthétique ou en matière comprimée naturelle.

5. Palette selon l'une des revendications 1 - 5, caractérisée par le fait que le matériel de la couche consiste en un résidu recyclable, de préférence en caoutchouc et là on donne surtout préférence à un caoutchouc en forme de vieux pneus de voitures ou de déchets industriels.

6. Palette selon l'une des revendications 1 - 5, caractérisée par le fait que la couche (13; 16; 19; 21) est du moins en partie pourvue d'une structure sur la face supérieure qui freine le glissement.

7. Palette selon l'une des revendications 1 - 6, caractérisée par le fait que les goussets (1) présentent des creux pour la réception (2) des baguettes de couverture (3).

8. Palette selon l'une des revendications 1 - 7, caractérisée par le fait que les goussets (1) sont formés comme des profils rectangulaires.

9. Palette selon l'une des revendications 1 - 8, caractérisée par le fait que les goussets (1) et les baguettes de couverture (3) sont ou bien collés, vicés, cloués ou rivés.

10. Palette selon l'une des revendications 1 - 9, caractérisée par le fait que la palette présente en plus des renforts d'angle qui consistent également en une partie de support complètement vêtue du matériel élastique.
